# EUROPEAN PATENT APPLICATION

(11) **EP 1 011 285 A1**
(43) Date of publication of application: **21.06.2000**
(21) Application number: 99124946.7
(22) Date of filing: 14.12.1999
(51) Int. Cl.: H04Q 7/38, H04M 1/66

(54) **Personal communication system and communication method thereof for performing a subscriber authenticating process**

(30) Priority: 15.12.1998 JP 35625198
(71) Applicant: NEC CORPORATION, Tokyo (JP)
(72) Inventor: Ito, Tsutomu, Minato-ku, Tokyo (JP)
(74) Representative: Glawe, Delfs, Moll & Partner

(57) **Abstract**

The present invention is a personal communication system and the communication method. According to the present invention, the subscriber authenticating process is performed by extracting at least one type of physical features (such as voiceprint, fingerprint, physiognomy, and/or holograph) of the user as user's physical information. The extracted physical data is collated with data registered in the subscriber database.

## Description

### Background of the Invention

### 1. Field of the Invention

The present invention relates to a personal communication system and a personal communication method for performing a subscriber authenticating process with a terminal side function for extracting a features of user's physical information (such as voiceprint, fingerprint, physiognomy, or holograph) and converting the extracted information into data and a network side function for collating the extracted data with data registered in a subscriber database.

### 2. Description of the Related Art

In a conventional mobile communication system, a subscriber is ordinarily authenticated using a terminal unit. Thus, if such a terminal is stolen, the system is illegally used. Consequently, the reliability and safety of the security are low.

In a new type personal communication system that has been proposed in a recent year, a subscriber thereof can receive and transmit a call with a subscriber number assigned to the subscriber regardless of the location thereof. Since such a new system is more convenient than the conventional mobile communication system, the new system should have higher security than the conventional system. To do that, it is necessary to authenticate both the terminal unit and the subscriber.

In another example of personal communication system that has been proposed, the network side has a database that correlates subscriber numbers with physical terminal numbers and mutually converts a subscriber number into a physical terminal number or vice versa.

In the system, a subscriber is authenticated with an ID and a password that are input. Thus, the database is updated. In this case, if the security is improved, the authenticating operation performed by the subscriber becomes complicated. In addition, the subscriber may forget his or her password. Moreover, the password may be stolen. Thus, the reliability and safety of the security in the system is not high.

In a further example of personal communication system, an IC card that stores subscriber information such as a subscriber number is inserted into a terminal unit. In this system, the subscriber is authenticated by comparing the subscriber information stored in the IC card with data stored in a subscriber database on the network side. In this system, as with the conventional mobile communication system, the subscriber does not need to perform the authenticating operation. However, if the IC card is stolen, the system is illegally used. Thus, the security of the system is low.

In such a conventional mobile communication system and such a conventional personal communication system, the subscriber's authenticating operation is required to be traded off with the security. Thus, when the authenticating operation is simplified, the reliability and safety of the security are degraded.

### Summary of the Invention

The present invention is made from the above-described point of view. An object of the present invention is to provide a personal communication system and a communication method thereof that allow a subscriber of the system to be authenticated with high security and simple subscriber's operation.

A first aspect of the present invention is a personal communication system, comprising a subscriber terminal unit for transmitting user's physical information, a subscriber exchange for receiving the user's physical information as a signal message, and a home memory for collating data stored therein with the received user's physical information and determining whether or not the user of the subscriber terminal unit is a valid subscriber of the personal communication system.

The subscriber terminal unit may have an user's physical information input unit for sampling the user's physical information such as voiceprint, fingerprint, physiognomy, or holograph that is input by the user, and a feature extracting means for extracting a feature parameter that sufficiently represents the feature of the user from the sampled data. The subscriber exchange may have a signal message transmitting and receiving means for transmitting and receiving a signal message between the subscriber terminal unit and the home memory. The home memory may have a subscriber database for storing data of all subscribers of the personal communication system, and a collating and determining means for collating the feature parameter with data stored in the subscriber database in a manner corresponding to the type of the user's physical information and a feature extracting algorithm and calculating the similarity of the feature parameter and the data stored in the subscriber database.

An encrypting and decrypting means may be disposed between the subscriber terminal unit and the subscriber exchange. The encrypting and decrypting means encrypts and decrypts a signal message transmitted and received therebetween.

The data for all the subscribers may be a subscriber number and the user's physical information of each of the subscribers.

When the similarity exceeds a predetermined threshold value, the collating and determining means may determine that the user of the subscriber terminal unit is a valid subscriber of the personal communication system. When the similarity does not exceed the predetermined threshold value, the collating and determining means may determine that the user of the subscriber terminal unit is not a valid subscriber of the personal communication system.

When the user of the subscriber terminal unit is a valid subscriber as the determined result of the collating and determining process of the collating and determining means, the subscriber exchange may cause the state of the subscriber terminal unit to transit from a suspend state to a standby state and an in-service state.

After the subscriber terminal unit has been transited to the standby state and the in-service state, when the term of validity of the subscriber terminal unit is expired, the subscriber exchange may cause the subscriber terminal unit to transit to the suspend state.

A plurality of user's physical information input units may be disposed corresponding to the number of types of the user's physical information. The collating and determining means may weight feature parameters with different weighting coefficients and compares the sum of the weighted feature parameters with a predetermined threshold value.

The subscriber exchange may set an operation parameter and an algorithm to the feature extracting means corresponding to the type of the subscriber terminal unit and the place at which the subscriber terminal unit is used.

The operation parameter and the algorithm may be set corresponding to a feature parameter evaluated against test data.

The feature extracting means may perform an adding and averaging process for a plurality of samples of the user's physical information so as to cancel a noise component from the user's physical information.

A plurality of subscriber exchanges for receiving user's physical information may be disposed. Signal messages may be transmitted and received between the plurality of subscriber exchanges through a gateway exchange.

The subscriber database may store a log of authentication history of the subscriber. When the subscriber authenticating process has failed successively a predetermined number of times, the subscriber exchange may prohibit the subscriber terminal unit from being used.

When the subscriber authentication state of the subscriber terminal unit is in a suspend state, the subscriber exchange may allow the subscriber terminal unit to originate an emergency call.

A second aspect of the present invention is a personal communication method, comprising the steps of (a) transmitting user's physical information, (b) receiving the user's physical information as a signal message, and (c) collating data stored therein with the received user's physical information and determining whether or not the user of the subscriber terminal unit is a valid subscriber of the personal communication method.

Step (a) may contain the step of (d) sampling the user's physical information such as voiceprint, fingerprint, physiognomy, or holograph that is input by the user, and (e) extracting a feature parameter that sufficiently represents the feature of the user from the sampled data. Step (c) may contain the step of (f) storing data of all subscribers, and (g) collating the feature parameter with data stored at step (f) in a manner corresponding to the type of the user's physical information and a feature extracting algorithm and calculating the similarity of the feature parameter and the data stored at step (f).

Each of step (a) and step (b) may contain the step of encrypting and decrypting a signal message transmitted and received at step (a) and step (b).

The data for all the subscribers at step (f) may be a subscriber number and the user's physical information of each of the subscribers.

Step (e) may contain the steps of when the similarity exceeds a predetermined threshold value, determining that the user is a valid subscriber, and when the similarity does not exceed the predetermined threshold value, determining that the user is not a valid subscriber.

Step (b) may contain the step of (h) when the user is a valid subscriber, causing a suspend state at step (a) to be transited to a standby state and an in-service state.

Step (h) may contain the step of (i) after transited to the standby state and the in-service state at step (a), when the term of validity of step (a) is expired, causing the state at step (a) to be transited to the suspend state.

Step (d) may have a plurality of sampling steps corresponding to the number of types of the user's physical information. Step (e) may contain the step of weighting feature parameters with different weighting coefficients and comparing the sum of the weighted feature parameters with a predetermined threshold value.

Step (d) may contain the step of (j) when extracting the feature parameter, setting an operation parameter and an algorithm corresponding to the type of step (a) and the place at which step (a) is performed.

Step (j) may contain the step of setting the operation parameter and the algorithm corresponding to a feature parameter evaluated against test data.

Step (g) may contain the step of performing an adding and averaging process for a plurality of samples of the user's physical information so as to cancel a noise component from the user's physical information.

Step (b) may contain the step of transmitting and receiving a signal message between a plurality of subscriber for receiving user's physical information through a gateway exchange.

Step (c) or each of step (f) and step (g) may contain the step of storing a log of authentication history of the subscriber and when the subscriber authenticating process has failed successively a predetermined number of times, prohibiting step (a) from being performed.

Step (i) may contain the step of when the subscriber authentication state at step (a) is in a suspend state, allowing an emergency call to be originated at step (a).

In the personal communication system and the communication method thereof according to the present invention, the subscriber's authenticating process of the personal communication system is performed by extracting a feature of a user as user's physical information (voiceprint, fingerprint, physiognomy, or holograph) and collating the user's physical information with data registered in the subscriber database.

These and other objects, features and advantages of the present invention will become more apparent in light of the following detailed description of a best mode embodiment thereof, as illustrated in the accompanying drawings.

### Brief Description of Drawings

Fig. 1 is a block diagram showing the structure of a personal communication system according to an embodiment of the present invention;
Fig. 2 is a block diagram showing the detailed structure of a subscriber terminal unit, a subscriber exchange, and a home memory of the personal communication system shown in Fig. 1;
Fig. 3 is a sequence diagram for explaining an operation of the personal communication system shown in Fig. 1;
Fig. 4 is a sequence diagram for explaining an operation of the personal communication system shown in Fig. 1;
Fig. 5 is a sequence diagram for explaining an operation of the personal communication system shown in Fig. 1;
Fig. 6 is a sequence diagram for explaining an operation of the personal communication system shown in Fig. 1;
Fig. 7 is a sequence diagram for explaining an operation of the personal communication system shown in Fig. 1;
Fig. 8 is a sequence diagram for explaining an operation of the personal communication system shown in Fig. 1;
Fig. 9 is a sequence diagram for explaining an operation of the personal communication system shown in Fig. 1;
Fig. 10 is a block diagram showing the structure of a personal communication system according to another embodiment of the present invention; and
Fig. 11 is a sequence diagram for explaining an operation of the personal communication system shown in Fig. 10.

### Description of Preferred Embodiments

Next, with reference to the accompanying drawings, embodiments of the present invention will be described.

### (First Embodiment)

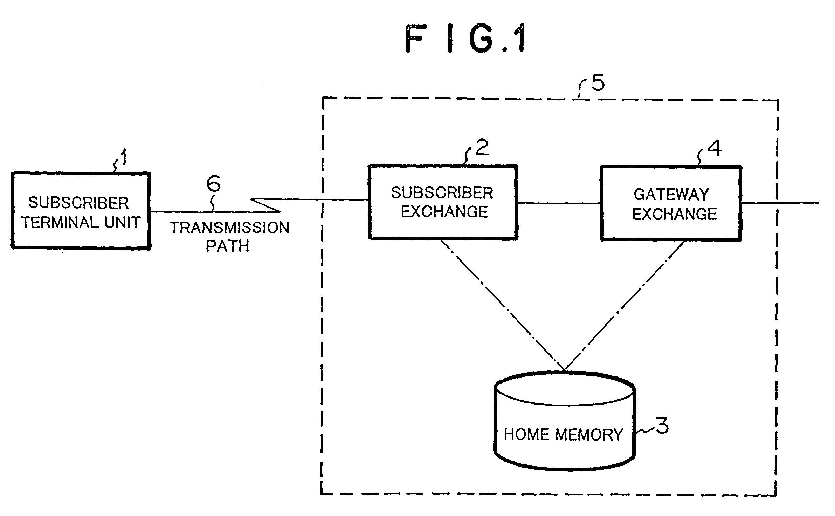

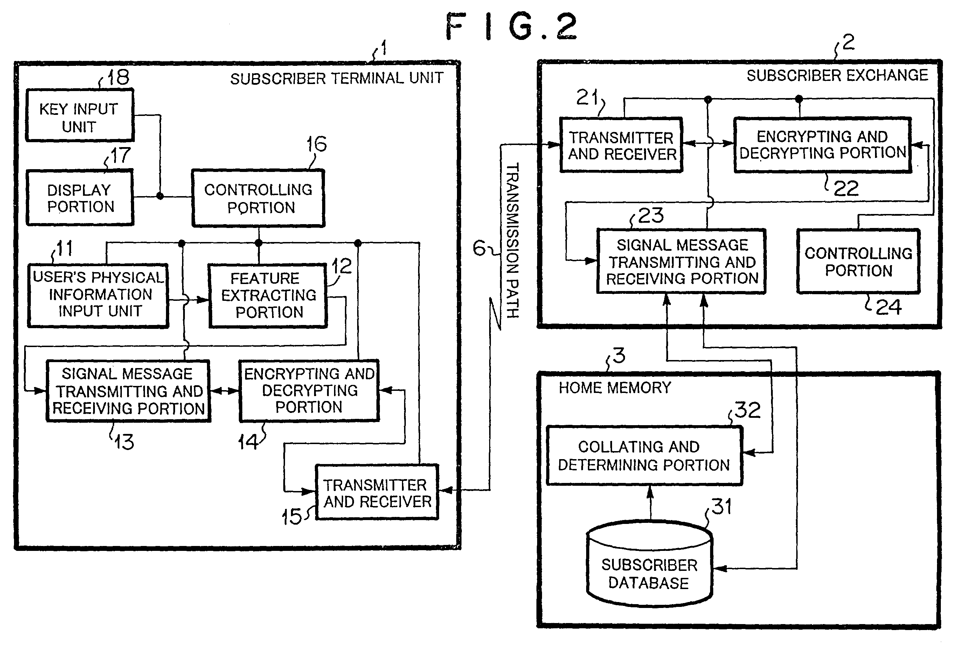

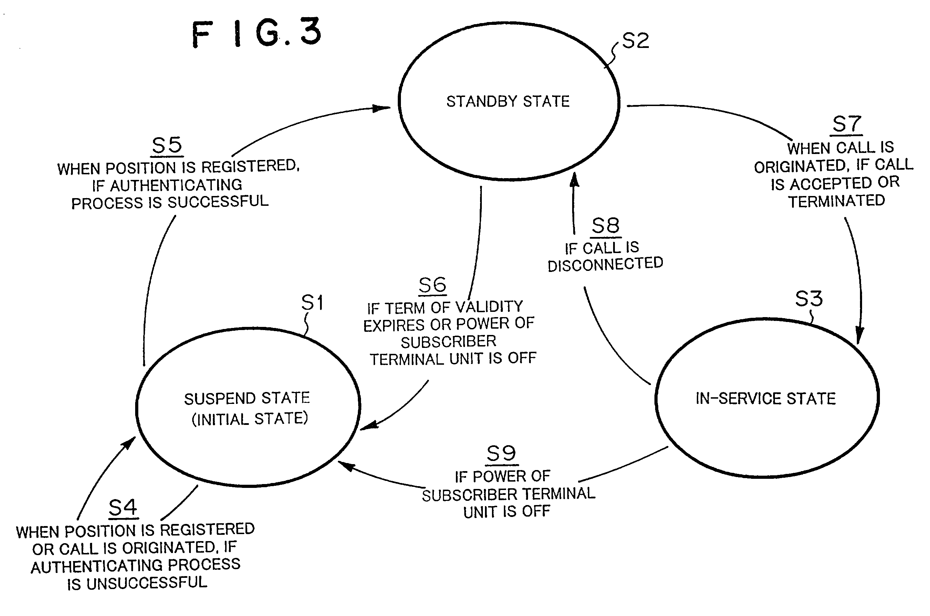

Fig. 1 is a block diagram showing the structure of a personal communication system according to the present invention. Fig. 2 is a block diagram showing the detailed structure of a subscriber terminal unit, a subscriber exchange, and a home memory of the personal communication system shown in Fig. 1. Figs. 3 to 6 are sequence diagrams for explaining an operation of the personal communication system shown in Fig. 1.

The personal communication system shown in Fig. 1 has a subscriber terminal unit 1, a transmission path 6 (wireless or wired), an exchange 5. The exchange 5 includes a subscriber exchange 2, a home memory 3, and a gateway exchange 4.

As shown in Fig. 2, the subscriber terminal unit 1 has a user's physical information input unit 11, a feature extracting portion 12, a signal message transmitting and receiving portion 13, an encrypting and decrypting portion 14, a transmitter and receiver 15, a controlling portion 16, a display portion 17, and a key input unit 18.

The user's physical information input unit 11 samples user's physical information that input by the user. The user's physical information is for example voiceprint, fingerprint, physiognomy, or holograph. The feature extracting portion 12 extracts a feature parameter that sufficiently represents the feature of the user corresponding to the input voiceprint, fingerprint, physiognomy, or holograph from the sampled data. In this example, the voiceprint is input through a microphone. The fingerprint is input through a pressure sheet or a photoelectric conversion elements of a video camera. The physiognomy is input through a video camera. The holograph is input through a pressure sheet or a photoelectric conversion elements of a video camera.

The signal message transmitting and receiving portion 13 transmits and receives a signal message to/from the subscriber exchange 2. The encrypting and decrypting portion 14 encrypts and decrypts a signal message transmitted and received to/from the subscriber exchange 2. Thus, the security of data transmitted and received to/from the subscriber exchange 2 is maintained.

The transmitter and receiver 15 mutually performs an electric signal converting process corresponding to the characteristics of the transmission path and a message converting process for an encrypted signal message. The display portion 17 of a liquid crystal device, a light emitting diode or so like displays various types of information for the user. The key input unit 18 of a keyboard, a switching device or so like allows the user to perform a key inputting operation.

The controlling portion 16 sets parameters required for the user's physical information input unit 11, the feature extracting portion 12, the signal message transmitting and receiving portion 13, the encrypting and decrypting portion 14, the transmitter and receiver 15, the display portion 17, and the key input unit 18 and controls their operations.

The subscriber exchange 2 has a transmitter and receiver 21, an encrypting and decrypting portion 22, a signal message transmitting and receiving portion 23, and a controlling portion 24.

The functions of the transmitter and receiver 21 and the encrypting and decrypting portion 22 are the same as those of the transmitter and receiver 15 and the encrypting and decrypting portion 14. The signal message transmitting and receiving portion 23 transmits and receives a signal message between the subscriber terminal unit 1 and the home memory 3.

The controlling portion 24 sets parameters necessary for the operations of the transmitter and receiver 21, the encrypting and decrypting portion 22, and the signal message transmitting and receiving portion 23 and controls the operations thereof.

The home memory 3 has a subscriber database 31 and a collating and determining portion 32. The subscriber database 31 stores data of all subscribers who subscribe to the subscriber exchange 2. The subscriber data stored in the subscriber database 31 is for example the subscriber number and user's physical information (voiceprint, fingerprint, physiognomy, or holograph) of each subscriber.

The collating and determining portion 32 collates input data with data stored in the home memory 3 corresponding to the type of subscriber authentication information and a feature extracting algorithm and calculates the similarity thereof. When the obtained similarity exceeds a predetermined threshold value, the collating and determining portion 32 determines that the user of the subscriber terminal unit 1 is a valid subscriber. Otherwise, the collating and determining portion 32 determines that the user of the subscriber terminal unit 1 is not a valid subscriber. The collating and determining portion 32 supplies the result of the subscriber authenticating process to the subscriber exchange 2.

The gateway exchange 4 relays a signal message against another subscriber exchange 2.

Next, the operation of the personal communication system shown in Fig. 1 will be described.

In the drawings that will be described in the following, it is supposed that when the position of the subscriber terminal unit 1 is registered (the power of the subscriber terminal unit 1 is turned on) and a call is originated and terminated from/to the subscriber terminal unit 1, a terminal authenticating process and a signal message encrypting process are performed. On the other hand, only when the position of the subscriber terminal unit 1 is registered, a subscriber authenticating process is performed. In addition, it is supposed that the subscriber terminal unit 1 is present in the service area of the network and that a channel of the transmission path has been acquired for a signal message for the subscriber authenticating process.

Fig. 3 shows a state transition of the subscriber authenticating process.

There are three states in the subscriber authenticating process. These three states are "suspend state" at S1, a "standby state" at S2, and "in-service state" at S3. The initial state is the "suspend state". After the subscriber authenticating process has been successfully performed, the "standby state" or the "in-service state" takes place. When the position of the subscriber terminal unit 1 is registered at S4, the "suspend state" (S1) transits to the "standby state" (S2) at S5. The state transition is recorded to all the subscriber terminal unit 1, the subscriber exchange 2, and the home memory 3.

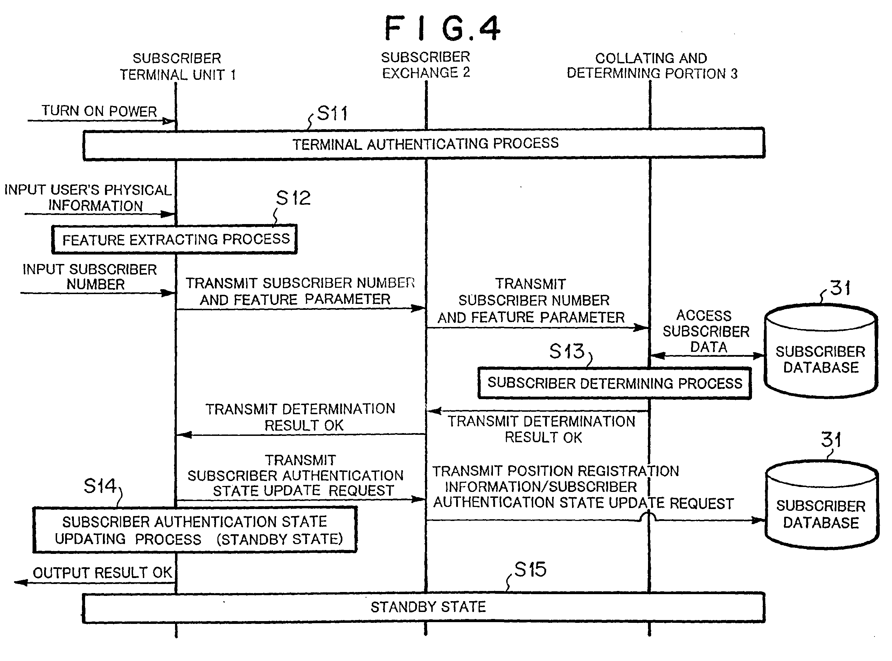

Next, with reference to a sequence diagram shown in Fig. 4, the operation after the position of the subscriber terminal unit has been registered will be described.

After the position of the subscriber terminal unit 1 has been registered, the user of the subscriber terminal unit 1 inputs his or her user's physical information at S11. The type of input information (such as voiceprint, fingerprint, physiognomy, or holograph) is pre-registered as a subscriber database 31. The user's physical information input unit 11 corresponds to the type of input information.

After the user has input the user's physical information, the user dials his or her subscriber number. The subscriber terminal unit 1 analyzes the input user's physical information at S12 and transmits the analyzed result (feature parameter) and the subscriber number as a signal message (subscriber authentication state change request) to the subscriber exchange 2. The feature parameter and the subscriber number are transmitted to the home memory 3 through the subscriber exchange 2.

In the home memory 3, the collating and determining portion 32 accesses the subscriber database 31 with the subscriber number. At this point, the collating and determining portion 32 collates the input data with the registered data corresponding to the type of the user's physical information and the feature extracting algorithm and calculates the similarity of the input data and the registered data as the subscriber determining process at S13. When the similarity exceeds a predetermined threshold value, the collating and determining portion 32 determines that the user of the subscriber terminal unit 1 is a valid subscriber and transmits a subscriber authentication result (determination result OK) to the subscriber exchange 2.

When the subscriber exchange 2 receives the subscriber authentication result OK, the subscriber exchange 2 transmits the determination result OK to the subscriber terminal unit 1. In addition, the subscriber exchange 2 updates position registration information/subscriber authentication state stored in the subscriber database 31 at S14. When the subscriber terminal unit 1 receives the determination result OK, the subscriber terminal unit 1 updates the stored subscriber authentication state to the "standby state" at S15 and displays it on the display portion 16.

Thereafter, the user of the subscriber terminal unit 1 is authenticated as a valid subscriber who has contacted with the network for the communication service using the subscriber number. At this point, the subscriber terminal unit 1, the subscriber exchange 2, and the home memory 3 have prepared the communication service. In other words, as shown in Fig. 3, the subscriber terminal unit 1 transits the "standby state" (S2) to the "in-service state" (S3) through S7.

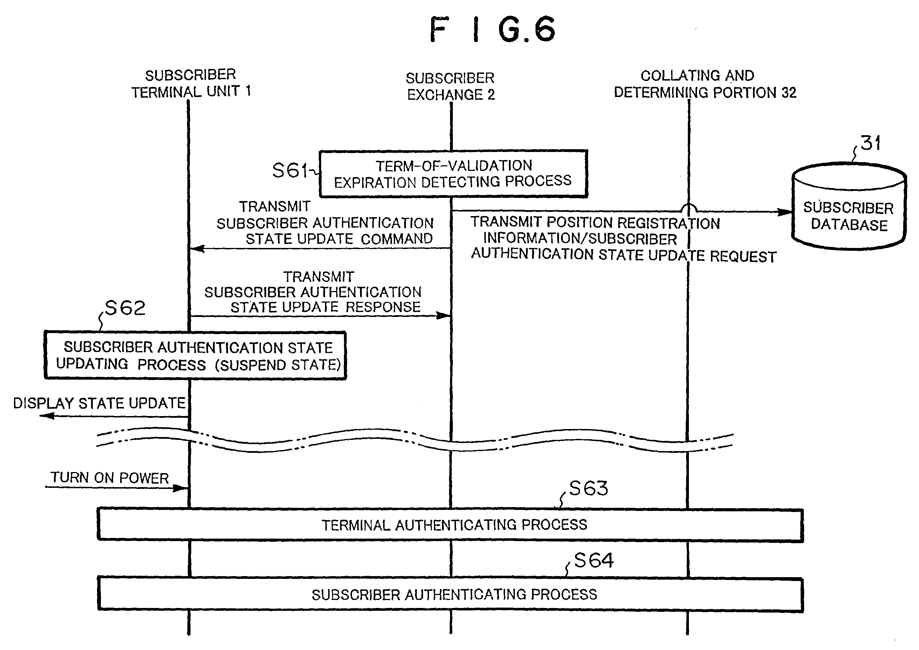

However, the qualification as the valid subscriber of the user of the subscriber terminal unit 1 is expired in the following conditions. As shown in Fig. 6, when a term-of-validity expiration state is detected (at S61), the subscriber exchange 2 updates the position registration information and the subscriber authentication state stored in the subscriber database 31. Thereafter, the subscriber exchange 2 issues a subscriber authentication state update command to the subscriber terminal unit 1. When the subscriber exchange 2 receives a response from the subscriber terminal unit 1, the subscriber terminal unit 1 transits to the "suspend state" (at S62) and displays the state transition on the display portion. When the power of the subscriber terminal unit 1 is turned on, the subscriber exchange 2 performs the terminal authenticating process (at S63) and then the subscriber authenticating process (at S64).

In other words, when the subscriber exchange 2 detects the continuation of the "standby state" for t1, the qualification as the valid subscriber of the user of the subscriber terminal unit 1 is expired.

After the subscriber exchange 2 has successfully performed the authenticating process, a time period t2 (where t2 > t1) has elapsed, and the subscriber exchange 2 detects the "standby state", the qualification as the valid subscriber of the user of the subscriber terminal unit 1 is expired.

The subscriber exchange 2 transmits the subscriber authentication state update command to the subscriber terminal unit 1. Thereafter, the subscriber terminal unit 1 transits to the "suspend state" (at S62). The subscriber exchange 2 completes the service for the subscriber. Thereafter, the subscriber terminal unit 1 updates the authentication state to the "suspend state".

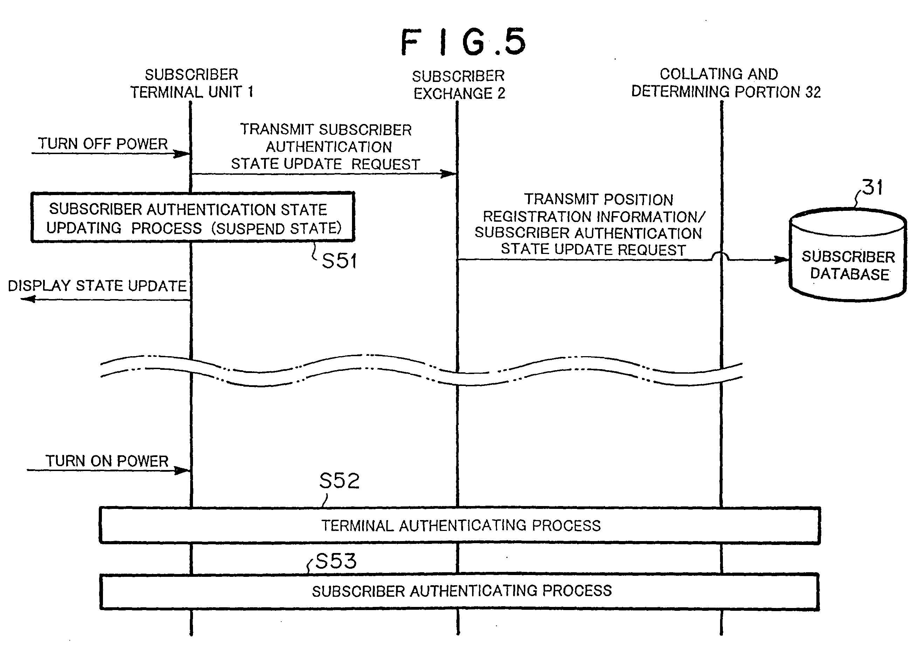

When a valid subscriber turns off the power of the subscriber terminal unit 1, as shown in Fig. 5, the subscriber terminal unit 1 transmits a subscriber authentication state update request to the network side. In addition, the subscriber terminal unit 1 transits the authentication state to the "suspend state" (at S51). When the subscriber exchange 2 receives the request, the subscriber exchange 2 updates the authentication state to the "suspend state" and competes the service for the subscriber (at S51). After a predetermined time period has elapsed, when the power of the subscriber terminal unit 1 is turned on, the subscriber exchange 2 performs the terminal authenticating process (S52) and the subscriber authenticating process (S53).

According to the first embodiment, since the subscriber authenticating process is performed with user's physical information, the following effects that are superior to the conventional processes using a password, an IC card, or the like are obtained.

As a first effect, the security of the authenticating process according to the first embodiment is higher than that of the conventional processes. In other words, a password and information stored in an IC card can be relatively easily duplicated. When a password or an IC card is stolen, the communication network is easily accessed. In contrast, since user's physical information is unique to each subscriber, it can be prevented from being duplicated. In addition, since user's physical information is generated corresponding to a large amount of information, it is difficult to replicate and steal it. Thus, with the authenticating process according to the first embodiment, the communication service can be securely prevented from being invalidly accessed.

As a second effect of the first embodiment, the subscriber authenticating process performed by a valid subscriber is simple. In other words, when a password is used, a subscriber should perform a complicated operation so as to improve the security. In addition, a subscriber may forget his or her password and the required authenticating operation. In contrast, since user's physical information is input with a dedicated unit, a subscriber can easily perform the authenticating operation. Thus, according to the first embodiment of the present invention, both the convenience and security that are required for a personal communication can be satisfied at a time. In addition, because of the synergism of these effects, the flexibility of the communication service can be improved.

### (Second Embodiment)

Next, a second embodiment of the present invention will be described. According to the second embodiment of the present invention, a plurality of types of user's physical information units 11 shown in Fig. 2 are used. These user's physical information units 11 authenticate a user with a plurality of feature parameters. In other words, a plurality of user's physical information input units 11 are disposed corresponding to for example voiceprint, fingerprint, and holograph. In addition, registered data corresponding to voiceprint, fingerprint, and holograph is stored in the subscriber information database 31.

Feature parameters are extracted from a plurality of types of user's physical information. The extracted feature parameters are transmitted to the subscriber exchange 2 at a time. The collating and determining portion 32 shown in Fig. 2 determines whether or not the user of the subscriber terminal unit 1 is a valid subscriber of the network with all the types of feature parameters. As the determining method, when the similarity is calculated, the individual feature parameters are weighted with respective weighting coefficients. The sum of the weighted feature parameters is compared with a predetermined threshold value.

Thus, according to the second embodiment, since the feature parameters are weighted with respective weighting coefficients, the determination accuracy and security can be further improved. The weighting coefficients may be varied corresponding to the type of the subscriber terminal unit 1 and the place at which of the subscriber terminal unit 1 is used.

### (Third Embodiment)

Next, a third embodiment of the present invention will be described. The basic structure of the third embodiment is the same as that of each of the first and second embodiments. However, the feature parameter extracting method for user's physical information according to the third embodiment is different from that of each of the first and second embodiments.

According to the third embodiment, before user's physical information is input to the user's physical information input unit 11 shown in Fig. 2, an operation parameter and an algorithm for the feature extracting portion 12 are set by the subscriber exchange 2. The operation parameter and the algorithm are pre-set corresponding to the operational environment such as the type of the subscriber terminal unit 1 and the place at which the subscriber terminal unit 1 is used.

Thus, according to the third embodiment, since the operation parameter and the algorithm are pre-set by the subscriber exchange 2 corresponding to the operational environment such as the type of the subscriber terminal unit 1 and the place at which the subscriber terminal unit 1 is used, the determination accuracy of voiceprint that is largely affected by the operating environment can be more improved.

For user's physical information that is less affected by the operating environment, the algorithm of the feature extracting portion 12 shown in Fig. 2 can be randomly selected. For other types of feature information, the feature extracting method can be changed whenever the authenticating process is performed. In this case, the safety can be further improved.

### (Fourth Embodiment)

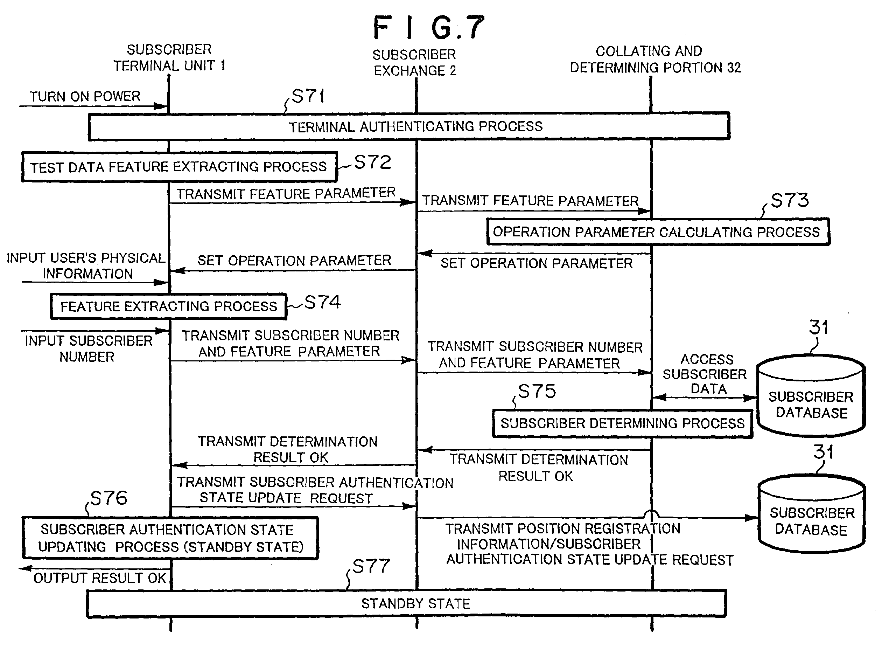

Next, a fourth embodiment of the present invention will be described. The basic structure of the fourth embodiment is the same as that of the third embodiment. However, according to the fourth embodiment, test data of user's physical information is stored in the subscriber terminal unit 1. Fig. 7 is a sequence diagram showing the operation of the network system according to the fourth embodiment. As shown in Fig. 7, the subscriber terminal unit 1 performs a terminal authenticating process (at S71) and then a subscriber authenticating process. When the subscriber terminal unit 1 starts the subscriber authenticating process, the subscriber terminal unit 1 evaluates test data of user's physical information and transmits the resultant feature parameter (at S72) to the subscriber exchange 2. The collating and determining portion 32 calculates an operation parameter (at S73) and transmits the operation parameter to the subscriber terminal unit 1. Thereafter, a subscriber inputs his or her user's physical information to the subscriber terminal unit 1. The subscriber terminal unit 1 executes a feature extracting process (at S74). The collating and determining portion 32 compares the input user's physical information with data stored in the subscriber database 31 (at S75). As a result, the operation parameter according to the third embodiment is set.

Thus, according to the fourth embodiment, in addition to the effect of the third embodiment, the characteristic of the user's physical information input unit 11 can be tuned (at S76 and S77).

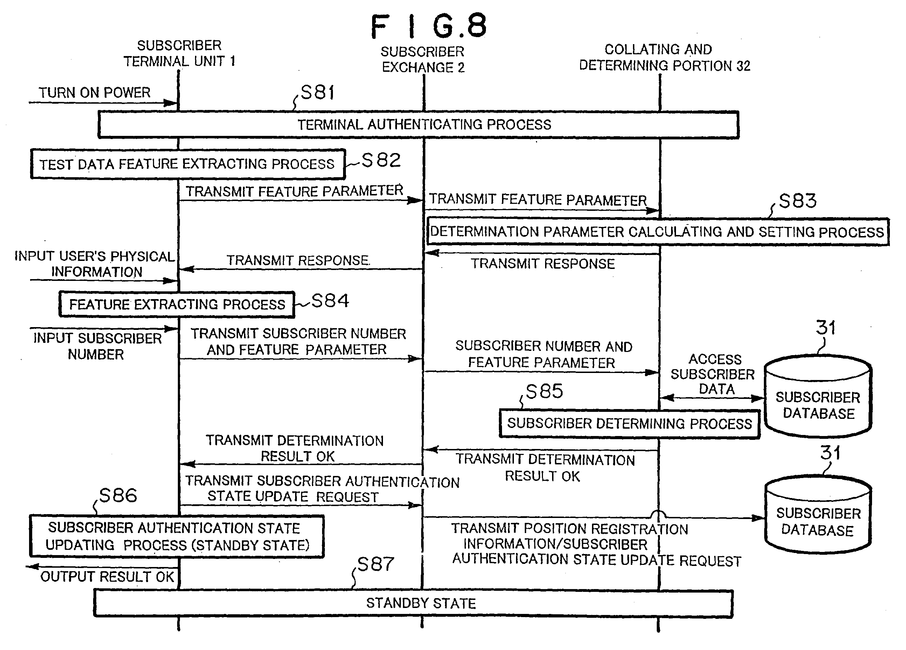

Alternatively, as shown in a sequence diagram shown in Fig. 8, the operation parameter of the subscriber terminal unit 1 may be fixed (at S83). The result of the test data can be affected to the determination operation parameter of the collating and determining portion 32 (at S81 to S87).

### (Fifth Embodiment)

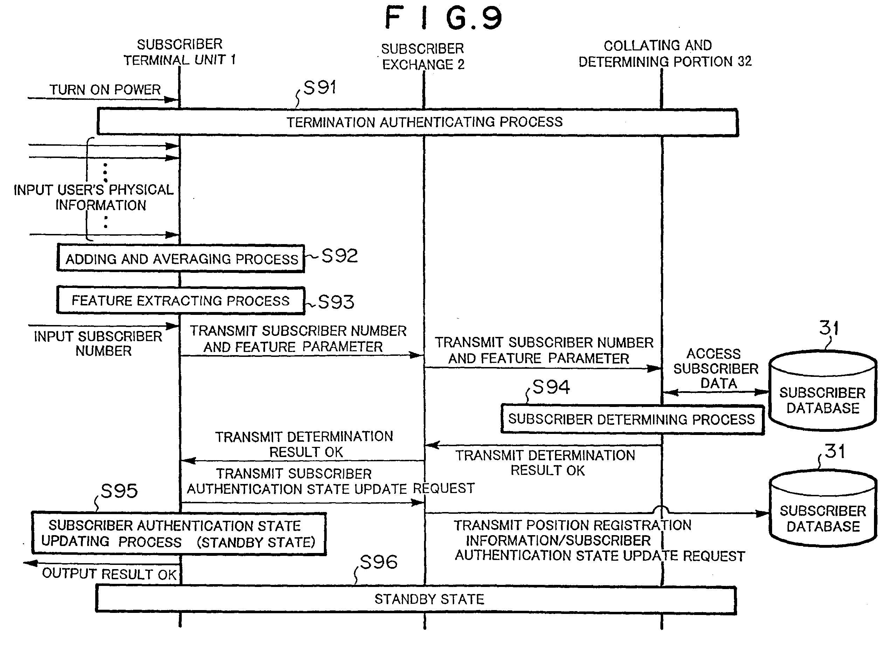

Next, a fifth embodiment of the present invention will be described. According to the fifth embodiment of the present invention, noise is removed from input user's physical information. Fig. 9 is a sequence diagram showing the operation of the network according to the fifth embodiment. As shown in Fig. 9, user's physical information is input several times (at S91). By performing an adding and averaging process for sampled data, the noise component is canceled (at S92 and S93 to S96).

Thus, according to the fifth embodiment, since the feature extracting portion 12 evaluates a feature parameter using sample data that has been added and averaged, the influence of the noise can be suppressed. Consequently, the determination accuracy is improved.

### (Sixth Embodiment)

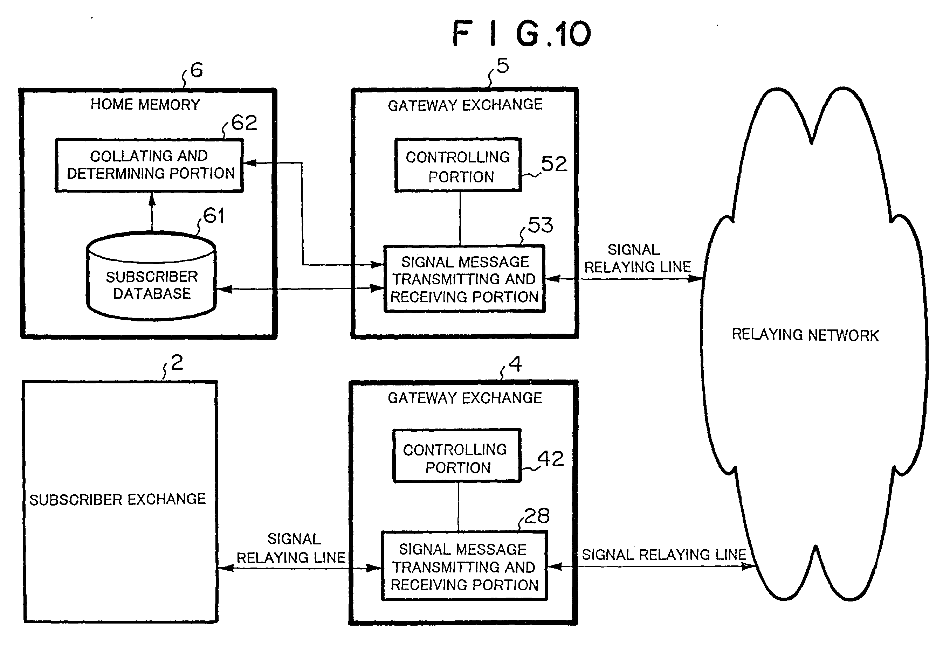

Next, a sixth embodiment of the present invention will be described. According to the sixth embodiment, the user of the subscriber terminal unit 1 is not in a position registered area. Fig. 10 is a block diagram showing the structure of a personal communication system according to the sixth embodiment of the present invention. In the personal communication system shown in Fig. 10, a gateway exchange 5 and a home memory 6 are added to the system shown in Fig. 1.

The gateway exchange 5 has a controlling portion 52 and a signal message transmitting and receiving portion 53. The functions of the controlling portion 52 and the signal message transmitting and receiving portion 53 are the same as the functions of the controlling portion 24 and the signal message transmitting and receiving portion 23 shown in Fig. 2.

The home memory 6 has a collating and determining portion 62 and a subscriber database 61. The functions of the collating and determining portion 62 and the subscriber database 61 are the same as the functions of the collating and determining portion 32 and the subscriber database 31 shown in Fig. 2.

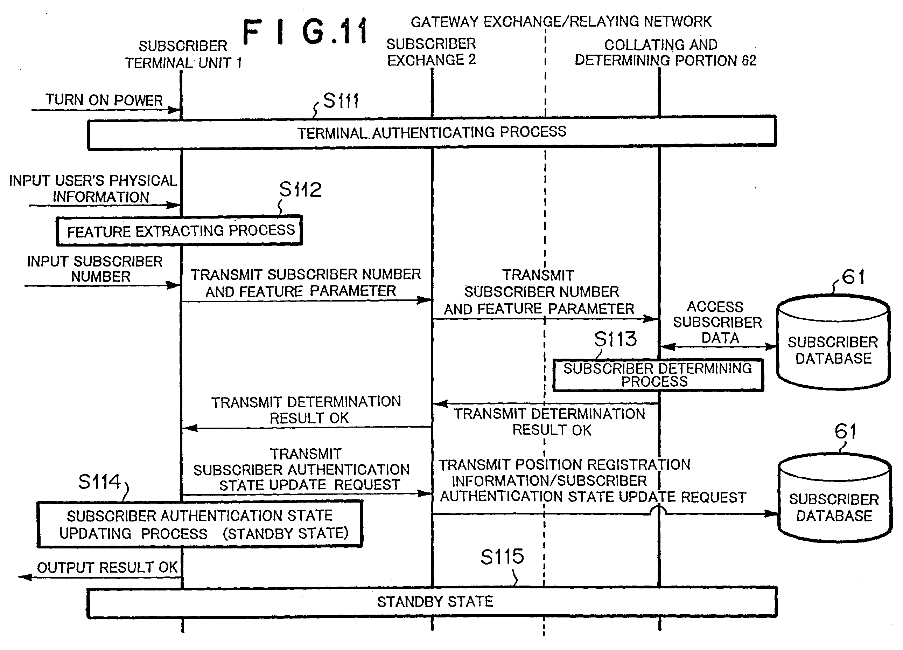

Fig. 11 is a sequence diagram showing the operation of the personal communication system according to the sixth embodiment of the present invention. Referring to Fig. 11, corresponding to a subscriber number that is input by a subscriber in the subscriber authenticating operation, the position registered area, the gateway exchange 5, and the home memory 6 of the subscriber are obtained. The subscriber exchange 2 transmits the subscriber number and a feature parameter to the home memory 6 through the gateway exchange 4, a relaying network, and the gateway exchange 5. The collating and determining portion 62 of the home memory 6 performs an authenticating process and a determining process in the same manner as the first to fifth embodiments (at S111 to S113) and transmits the determined result to the subscriber exchange 2 (at S114 and S115).

Thus, even if the user of the subscriber terminal unit 1 is not in the position registered area, he or she can perform the authenticating operation. Thus, the personal communication network can be expanded and mutually connected to another network.

### (Seventh Embodiment)

Next, a seventh embodiment of the present invention will be described. According to the seventh embodiment, countermeasures against an authenticating operation preformed by an unauthorized user who pretends a valid subscriber are taken.

In other words, a log of the subscriber authenticating operation is stored in the subscriber database 31 shown in Fig. 2. When the subscriber terminal unit 1 performs the authenticating process, the subscriber terminal unit 1 transmits a terminal identification number and a subscriber number to the collating and determining portion 32. The collating and determining portion 32 references the log of the history of the subscriber number and determines whether or not the subscriber authenticating process for the terminal number has failed successively a predetermined number of times. When the determined result is Yes, the collating and determining portion 32 immediately transmits the determined result NG to the subscriber exchange 2 so as to prohibit the unauthorized user from accessing the network.

Thus, the subscriber exchange 2 prevents the unauthorized user from trying to successively performing the authenticating operation.

### (Eighth Embodiment)

Next, an eighth embodiment of the present invention will be described. According to the eighth embodiment, even if the subscriber authentication state of the subscriber terminal unit 1 is in the "suspend state", call originations using emergency telephone numbers such as "991" can be permitted. Thus, even if a user whose is not a valid subscriber of the network, he or she can use the subscriber terminal unit 1 as an emergency communication means.

According to the personal communication system and the communication method of the present invention, the subscriber authenticating process is performed by extracting at least one type of physical features (such as voiceprint, fingerprint, physiognomy, and/or holograph) of the user as user's physical information. The extracted physical data is collated with data registered in the subscriber database. Thus, high security and easy user's authenticating operation can be accomplished at a time. In addition, even if a subscriber uses a subscriber terminal unit that does not belong to him or her, the subscriber can be authenticated and charged. Thus, the reliability of the system is improved.

Although the present invention has been shown and described with respect to a best mode embodiment thereof, it should be understood by those skilled in the art that the foregoing and various other changes, omissions, and additions in the form and detail thereof may be made therein without departing from the spirit and scope of the present invention.

## Claims

1. A personal communication system, comprising:
a subscriber terminal unit for transmitting user's physical information;
a subscriber exchange for receiving the user's physical information as a signal message; and
a home memory for collating data stored therein with the received user's physical information and determining whether or not the user of said subscriber terminal unit is a valid subscriber of the personal communication system.

2. The personal communication system as set forth in claim 1,
wherein said subscriber terminal unit has:
a user's physical information input unit for sampling the user's physical information such as voiceprint, fingerprint, physiognomy, or holograph that is input by the user; and
feature extracting means for extracting a feature parameter that sufficiently represents the feature of the user from the sampled data,
wherein said subscriber exchange includes:
signal message transmitting and receiving means for transmitting and receiving a signal message between said subscriber terminal unit and said home memory, and
wherein said home memory includes:
a subscriber database for storing data of all subscribers of the personal communication system; and
collating and determining means for collating the feature parameter with data stored in said subscriber database in a manner corresponding to the type of the user's physical information and a feature extracting algorithm and calculating the similarity of the feature parameter and the data stored in said subscriber database.

3. The personal communication system as set forth in claim 1 or 2, further comprising:
encrypting and decrypting means, disposed between said subscriber terminal unit and said subscriber exchange, for encrypting and decrypting a signal message transmitted and received therebetween.

4. The personal communication system as set forth in claim 2,
wherein the data for all the subscribers is a subscriber number and the user's physical information of each of the subscribers.

5. The personal communication system as set forth in claim 2,
wherein when the similarity exceeds a predetermined threshold value, said collating and determining means determines that the user of said subscriber terminal unit is a valid subscriber of the personal communication system, and
wherein when the similarity does not exceed the predetermined threshold value, said collating and determining means determines that the user of said subscriber terminal unit is not a valid subscriber of the personal communication system.

6. The personal communication system as set forth in claim 1 or 2,
wherein when the user of said subscriber terminal unit is a valid subscriber as the determined result of the collating and determining process of said collating and determining means, said subscriber exchange causes the state of said subscriber terminal unit to transit from a suspend state to a standby state and an in-service state.

7. The personal communication system as set forth in claim 6,
wherein after said subscriber terminal unit has been transited to the standby state and the in-service state, when the term of validity of said subscriber terminal unit is expired, said subscriber exchange causes said subscriber terminal unit to transit to the suspend state.

8. The personal communication system as set forth in claim 2,
wherein a plurality of user's physical information input units are disposed corresponding to the number of types of the user's physical information, and
wherein said collating and determining means weights feature parameters with different weighting coefficients and compares the sum of the weighted feature parameters with a predetermined threshold value.

9. The personal communication system as set forth in claim 2,
wherein said subscriber exchange sets an operation parameter and an algorithm to said feature extracting means corresponding to the type of said subscriber terminal unit and the place at which said subscriber terminal unit is used.

10. The personal communication system as set forth in claim 9,
wherein the operation parameter and the algorithm are set corresponding to a feature parameter evaluated against test data.

11. The personal communication system as set forth in claim 2,
wherein said feature extracting means performs an adding and averaging process for a plurality of samples of the user's physical information so as to cancel a noise component from the user's physical information.

12. The personal communication system as set forth in claim 1 or 2,
wherein a plurality of subscriber exchanges for receiving user's physical information are disposed, and
wherein signal messages are transmitted and received between said plurality of subscriber exchanges through a gateway exchange.

13. The personal communication system as set forth in claim 2,
wherein said subscriber database stores a log of authentication history of the subscriber, and
wherein when the subscriber authenticating process has failed successively a predetermined number of times, said subscriber exchange prohibits said subscriber terminal unit from being used.

14. The personal communication system as set forth in claim 6,
wherein when the subscriber authentication state of said subscriber terminal unit is in a suspend state, said subscriber exchange allows said subscriber terminal unit to originate an emergency call.

15. A personal communication method, comprising the steps of:
(a) transmitting user's physical information;
(b) receiving the user's physical information as a signal message; and
(c) collating data stored therein with the received user's physical information and determining whether or not the user of said subscriber terminal unit is a valid subscriber of the personal communication method.

16. The personal communication method as set forth in claim 15,
wherein step (a) contains the steps of:
(d) sampling the user's physical information such as voiceprint, fingerprint, physiognomy, or holograph that is input by the user; and
(e) extracting a feature parameter that sufficiently represents the feature of the user from the sampled data, and
wherein step (c) contains the steps of:
(f) storing data of all subscribers; and
(g) collating the feature parameter with data stored at step (f) in a manner corresponding to the type of the user's physical information and a feature extracting algorithm and calculating the similarity of the feature parameter and the data stored at step (f).

17. The personal communication method as set forth in claim 15,
wherein each of step (a) and step (b) contains the step of:
encrypting and decrypting a signal message transmitted and received at step (a) and step (b).

18. The personal communication method as set forth in claim 15,
wherein the data for all the subscribers at step (f) is a subscriber number and the user's physical information of each of the subscribers.

19. The personal communication method as set forth in claim 16,
wherein step (e) contains the steps of:
when the similarity exceeds a predetermined threshold value, determining that the user is a valid subscriber; and
when the similarity does not exceed the predetermined threshold value, determining that the user is not a valid subscriber.

20. The personal communication method as set forth in claim 15 or 16,
wherein step (b) contains the step of
(h) when the user is a valid subscriber, causing a suspend state at step (a) to be transited to a standby state and an in-service state.

21. The personal communication method as set forth in claim 20,
wherein step (h) contains the step of:
(i) after transited to the standby state and the in-service state at step (a), when the term of validity of step (a) is expired, causing the state at step (a) to be transited to the suspend state.

22. The personal communication method as set forth in claim 16,
wherein step (d) has a plurality of sampling steps corresponding to the number of types of the user's physical information, and
wherein step (e) contains the step of:
weighting feature parameters with different weighting coefficients and comparing the sum of the weighted feature parameters with a predetermined threshold value.

23. The personal communication method as set forth in claim 16 or 22,
wherein step (d) contains the step of:
(j) when extracting the feature parameter, setting an operation parameter and an algorithm corresponding to the type of step (a) and the place at which step (a) is performed.

24. The personal communication method as set forth in claim 23,
wherein step (j) contains the step of:
setting the operation parameter and the algorithm corresponding to a feature parameter evaluated against test data.

25. The personal communication method as set forth in claim 16,
wherein step (g) contains the step of:
performing an adding and averaging process for a plurality of samples of the user's physical information so as to cancel a noise component from the user's physical information.

26. The personal communication method as set forth in claim 16,
wherein step (b) contains the step of:
transmitting and receiving a signal message between a plurality of subscriber for receiving user's physical information through a gateway exchange.

27. The personal communication method as set forth in claim 15 or 16,
wherein step (c) or each of step (f) and step (g)
contains the step of: storing a log of authentication history of the subscriber and when the subscriber authenticating process has failed successively a predetermined number of times, prohibiting step (a) from being performed.

28. The personal communication method as set forth in claim 21,
wherein step (i) contains the step of:
when the subscriber authentication state at step (a) is in a suspend state, allowing an emergency call to be originated at step (a).
